# EUROPÄISCHE PATENTSCHRIFT

(11) **EP 1 784 674 B1**
(45) Veröffentlichungstag und Bekanntmachung des Hinweises auf die Patenterteilung: **14.10.2009**
(21) Anmeldenummer: 05726509.2
(22) Anmeldetag: 24.05.2005
(51) Int. Cl.: G02B 7/02

(54) **OBJEKTIV MIT KFZ-TAUGLICHER DICHTUNGSKONFIGURATION**
OBJECTIVE COMPRISING A SEALING CONFIGURATION WHICH IS SUITABLE FOR USE IN MOTOR VEHICLES
OBJECTIF DONT LA CONFIGURATION D'ETANCHEITE CONVIENT AUX VEHICULES AUTOMOBILES

(30) Priorität: 02.07.2004 DE 102004032179
(43) Veröffentlichungstag der Anmeldung: 16.05.2007
(73) Patentinhaber: ROBERT BOSCH GMBH, 70442 Stuttgart (DE)
(72) Erfinder: APEL, Uwe, 72666 Neckartailfingen (DE); HOELLT, Christian, 61130 Nidderau (DE)
(86) Internationale Anmeldenummer: PCT/EP2005/052363
(87) Internationale Veröffentlichungsnummer: WO 2006/003060

(56) Entgegenhaltungen:
- WO-A-20/05031423
- DE-B- 1 113 101
- GB-A- 568 590
- US-A- 2 394 894
- US-A- 4 887 887
- US-A- 4 909 599
- US-A- 5 926 326
- US-B1- 6 757 112

## Beschreibung

### Technisches Gebiet

Kommen Kameramodule im Kfz-Beirieb zum Einsatz, so sind diese neben hohen mechanischen Beanspruchungen auch großen Temperaturschwankungen sowie Feuchtigkeitseinflüssen ausgesetzt. Der Einsatz eines nicht vollständig dicht ausgelegten Kameramoduls unter fahrzeugüblichen Klimabedingungen kann einerseits zur Taubildung im optischen Pfad und andererseits zu einer Beeinträchtigung der Bildqualität führen. Eine Auskondensation der Feuchtigkeit ist häufig dann zu beobachten, wenn sich im Inneren des Kamera-Moduls über längere Zeit bei höheren Temperaturen eine hohe relative Luftfeuchtigkeit eingestellt hat und das Kamera-Modul dann innerhalb kurzer Zeit abgekühlt wird.

### Stand der Technik

Üblicherweise werden aus einem Objektiv und einem Sensorchip aufgebaute optische Aufnahmeeinheiten luftdicht ausgelegt. Das Eindringen von Feuchtigkeit als Folge der für viele eingesetzte Materialien nicht beliebig kleinen Wasserdampfdurchlässigkeit kann durch den Einsatz von Absorbermitteln, wie z.B. Zeolith, aufgefangen werden. Neben dem Einkleben der Frontlinse eines Linsenstapels ist der Einsatz von Dichtringen, so z.B. von O-Ringen aus verschiedenen Materialien, denkbar und stellt einen sinnvollen Ansatz zum dichten Aufbau dar. Dichtringe, die z.B. aus Elastomeren gefertigt sind, bieten gegenüber dem Kleben den Vorteil, dass eine Nacharbeit möglich ist. Ferner existiert das Risiko von Verschmutzungen bei Dichtringen nicht. Damit die Abdichtung bei Verwendung eines Dichtringes sicher gewährleistet ist, wird durch die Verschraubung eine definierte Kompression des Dichtringes erzeugt. Bedingt durch die Fertigungsstreuungen der Aufbauhöhen innerhalb eines Linsenstapels, der mehrere Linsen umfassen kann, ist eine über alle Exemplare gleich bleibende Kompression nicht gewährleistet, falls die Klemmung eines Dichtrings zwischen der vordersten Linsenfläche und einem Anlagemaß im Tubus des Objektivs wie z.B. einer Ringfläche erfolgt Darüber hinaus muss gewährleistet sein, dass der Dichtring nicht ungleichmäßig geklemmt wird, was z.B. durch lokale Überdehnung beim Verschrauben während der Montage auftreten kann. Für Objektive in den eingangs erwähnten Applikationsfällen ist es wichtig, die Anordnung der Einzellinsen mit möglichst kleinen Abweichungen zu erreichen, um die geforderte Bildqualität sicherzustellen. Damit ist eine gute Führung der Einzellinsen eines Linsenstapels erforderlich, die Führung der Einzellinsen darf nicht durch schief liegende Dichtringe beeinträchtigt werden. Von Nachteil bei einer auf einer Frontfläche aufliegenden Dichtung ist eine Beeinträchtigung des freien Strahldurchmessers, da die Randdicke der Frontlinse nicht beliebig reduziert werden kann.

Aus JP 2002 090603 A ist eine wasserdichte Kamera bekannt. Die wasserdichte Kamera ist mit einem Kameragehäuse ausgestattet, welches einen vorderen Teil und einen rückwärtigen Teil umfasst. Innerhalb des Kameragehäuses ist ein Linsenstapel aufgenommen. Innerhalb des Linsenstapels ist hinter der Frontlinse ein Hohlraum gebildet Eine eine Weitwinkelaufnahme ermöglichende Linse ist innerhalb dieses Hohlraums platziert. Die Frontlinse des Linsenstapels ist an der Öffnung des Linsenstapels vorgesehen und wird zudem als Dichtung eingesetzt. Ein Vorsprung an der Kante des Linsenstapels ist auf der Linsenseite mittels thermischem Fügen verstemmt. Ein O-Ring ist zwischen die äußere Peripherie der Linse und der Umfangsfläche einer inneren Wandung für den Linsenstapel zur Abdichtung des Ringspaltes zwischen diesen vorgesehen. Ferner wird ein weiterer O-Ring zwischen der äußeren Umfangsfläche des Kantenteils des Linsenstapels und der inneren Umfangsfläche des Kantenteils des vorderen Kameragehäuses platziert, um den Freiraum zwischen diesen zu versiegeln.

Aus US 5,519,543 ist ein optisches System für eine Inspektionseinrichtung bekannt. Eine in eine Erdbohrung oder ein in der Erde verlegtes Rohr hinablassbare Kamera umfasst einen röhrenförmigen Körper, der aus thermisch isolierendem Material besteht. An den einander gegenüber liegenden Enden des röhrenförmigen Körpers befindet sich eine Frontlinsengruppe und eine rückwärtige Linsengruppe. Die einander gegenüber liegenden Linsengruppen am vorderen und am rückwärtigen Ende sind thermisch gegeneinander isoliert, wobei eine Vakuumkammer im röhrenförmigen Körper ausgebildet ist, die sich im Wesentlichen entlang des optischen Weges des Lichts ersteckt.

Aus der GB 568,590 ist ein Verfahren zur Montage einer Linse in ein Gehäuse bekannt. Die US 6,757,112 offenbart eine Linsenanordnung und ein Verfahren zur Herstellung der Linsenanordnung. Aus der US 4,909,599 ist eine Befestigung einer optischen Linse mit einem Verschraubring bekannt. Die US 2,394,894 offenbart ein Verfahren zur Montage von Linsen. Aus der deutschen Auslegungsschrift DE-1 113 101 ist-eine Linsenbefestigung mit einem in einer Nut aufgenommen Ring bekannt. Die US 5,926,326 offenbart eine Anordnung zur Sicherung von Komponenten eines optischen Systems. Aus der US 4,887,887 ist ein Objektiv bekannt.

### Darstellung der Erfindung

Durch die erfindungsgemäß vorgeschlagene Ausführung eines Objektivs für eine optische Aufnahmeeinrichtung gemäss Anspruch 1 lassen sich unter Berücksichtigung der üblichen Fertigungstoleranzen hinsichtlich der mechanischen Abmessungen der Einzelteile diese kostengünstig mit einer dicht einsetzbaren Frontlinse aufbauen. Erfindungsgemäß wird vorgeschlagen, einen Distanzring in den Linsenstapel zu integrieren, der zwischen der Frontlinse und der sich an diese anschließenden zweiten Linse eingelassen ist. Gemeinsam mit den Distanzringen wird ein Dichtring eingesetzt, so dass sowohl eine definierte Kompression zur Abdichtung zweier Flächen als auch eine genaue Einstellung des Sollabstands zwischen den Linsen innerhalb des Linsenstapels erreicht werden kann.

Der erfindungsgemäß vorgeschlagenen Lösung folgend, lässt sich durch die Positionierung eines Distanzringes mit in diesem integriertem Dichtring unterhalb der Frontlinse eines Linsenstapels beim Verschrauben der Frontlinse mittels eines Vorschraubringes eine definierte Kompression aufbringen. Durch die erfindungsgemäß vorgeschlagene Lösung wird der Einfluss von fertigungsbedingt auftretenden Streuungen auf die Kompression begrenzt und zwar auf diejenigen Toleranzen, die bei der Fertigung des Distanzrings und des Tubus' auftreten. Es lassen sich jedoch die Toleranzen aller einzelnen Linsendicken und Distanaingdicken sowie die Längenstreuung des Tubus' durch die erfindungsgemäß vorgeschlagene Lösung ausgleichen.

Durch die erfindungsgemäß vorgeschlagene Integration eines Distanzrings, der des weiteren eine Dichiringaufnahme bildet, lässt sich eine Beeinträchtigung des freien Strahldurchmessers vermeiden, der dadurch vorgegeben ist, dass die Randdicke der Frontlinse nicht beliebig reduziert werden kann.

Der in den Distanzring integrierte Dichtring liegt bei der erfindungsgemäß vorgeschlagenen Auslegung des Objektivs nicht direkt unter dem aufzudrehenden Vorschraubring, so dass eine Verspannung bzw. eine lokale Überdehnung des Dichtrings nicht gegeben ist. Die Führung bzw. Zentrierung der Frontlinse durch die Innenwandung des Tubus bleibt nach wie vor gewährleistet Zudem lässt sich durch die Frontlinse die korrekte Lage des Dichtrings und des Distanzrings visuell überprüfen und die Handhabung in der Montage erheblich leichter.

Anstelle der Integration eines in den Distanzring einzulegen Elastomerringes kann alternativ das Anspritzen eines Dichtmaterials direkt an den Metallring vorgesehen werden.

### Zeichnung

Anhand der Zeichnung wird die erfindungsgemäß vorgeschlagene Lösung nachstehend detaillierter beschrieben.

Es zeigt:
Figur 1 den Querschnitt durch einen Linsenstapel eines erfindungsgemäß vorgeschlagenen Objektivs, und
Figur 2 eine Darstellung des Dichtbereichs in vergrößertem Maßstab.

### Ausfuhrungsvarianten

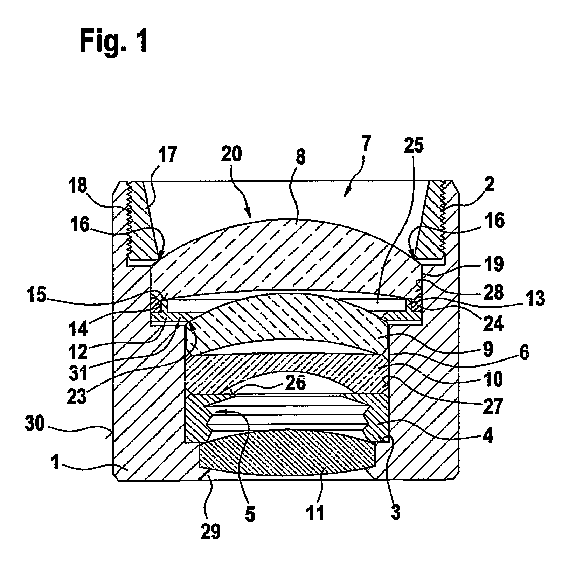

Figur 1 ist ein Objektiv zu entnehmen, in dessen Tubus 1 ein Linsenstapel 7 eingelassen ist Der Tubus 1 umfasst einen Gewindeabschnitt 2, in welchem ein Vorschraubring 17 eingeschraubt wird. Der Vorschraubring 17 umfasst ein zum Gewindeabschnitt 2 komplementäres Außengewinde 18 und fixiert eine erste Linse 8 (Frontlinse) des Linsenstapels 7 im Objektiv 1. Der Linsenstapel 7, der in den Tubus 1 aufgenommen ist, umfasst die bereits erwähnte erste Linse 8 (Frontlinse), eine darunter liegende zweite Linse 9, eine weitere dritte Linse 10 sowie eine vierte Linse 11.

Die vierte Linse 11 ist an der Unterseite des Tubus 1 eine Apertur 29 verschließend, in den Tubus 1 eingelassen. Oberhalb der vierten Linse 11 befindet sich ein Blendenring 4, der mit einer auf den optischen Anwendungszweck abgestimmten Profilierung 5 versehen sein kann. Der Blendenring 4 umfasst an seiner Oberseite eine Planfläche 26, auf der eine dritte Linse 10 plan aufliegt. Auf der dritten Linse 10 liegt eine zweite, konvex und konkav gewölbte Linse 9 auf. Die zweite Linse 9 und die dritte Linse 10 sind innerhalb einer ersten Aufnahme 6 des Tubus 1 durch eine erste Zentrierfläche 27 zentriert, geführt.

Darüber hinaus umfasst der Tubus 1 eine zweite Aufnahme 19. In die zweite Aufnahme 19, die durch zweite Zentrierflächen 28 begrenzt wird, ist die erste Linse 8 (Frontlinse) eingelassen. Die Frontlinse 8 weist eine konvexe Wölbung 20 auf. In den Randbereichen der konvex gewölbten Außenseite der ersten Linse 8 ist diese von einer Fixierkante 16 des Vorschraubrings 17 fixiert. Mittels des Vorschraubrings 17 wird die erste Linse 8 (Frontlinse) an einen in einem Hohlraum 25 zwischen der ersten Linse 8 und der Oberseite der zweiten Linse 9 eingelassenen Distanzring 12 angestellt. Der Distanzring 12, der bevorzugt aus einem metallischen Material gefertigt wird, umfasst einen ringförmig verlaufenden Aufsatz 13. Der Ringaufsatz 13 weist eine erste Anlagefläche 14 auf, in welche ein Dichtring 24 eingelassen ist. Der Dichtring 24 liegt einerseits an der ersten Anlagefläche 14 des Ringaufsatzes 13 an, andererseits an der zweiten Zentrierfläche 28 der zweiten Aufnahme 19 auf der Oberseite des Distanzrings 12 auf. Der Distanzring 12 seinerseits stützt sich mit einer Auflagekante 23 an der konvex gekrümmten Seite der zweiten Linse 9 ab.

Der Vollständigkeit halber sei erwähnt, dass die Mantelfläche des Tubus 1 mit Bezugszeichen 30 und die Apertur des Tubus, in welcher die vierte Linse 11 liegt, mit Bezugszeichen 29 bezeichnet ist.

Durch den Distanzring zwischen der ersten Linse 8 (Frontlinse) und der zweiten Linse 9 und den Einsatz eines Dichtrings 12, kann sowohl eine definierte Kompression zur Abdichtung zweier Flächen als auch eine genaue Einstellung des Sollabstands zwischen den Linsen 8, 9 des Linsenstapels 7 erreicht werden. Mittels des Distanzrings 12 wird der Abstand zwischen der ersten Linse 8 und der zweiten Linse 9 genau definiert. Bezug nehmend auf den in Fig. 1 dargestellten Linsenstapel 7, der aus vier Linsen und einem Blendenring aufgebaut ist, addieren sich, beginnend mit der zuerst in den Tubus 1 eingelegten vierten Linse 11, die Dickentoleranzen des Blendenrings 4, der dritten Linse 10, der zweiten Linse 9 sowie der ersten Linse 8. Wäre der am Distanzring 12 aufgenommene Dichtring 24 z.B. zwischen dem Vorschraubring 17, der ersten Linse 8 (Frontlinse) und dem Tubus 1 angeordnet, so ergäbe sich infolge der Fertigungsstreuung der Linsendicken im Linsenstapel 7 eine starke Variation der erreichbaren Kompression des Dichtrings 24. Infolge der geringen realisierbaren Querschnitte der Dichtringe ist bei zu erwartenden Fertigungsstreuung der aus Glas gefertigten Linsen 8, 9, 10 und 11 deren dichter Einbau nicht sichergestellt

Bei der erfindungsgemäß vorgeschlagenen, in Fig. 1 dargestellten Auslegung liegt der Dichtring nicht direkt unter dem aufzudrehenden Vorschraubring 17, so dass die Gefahr einer Verspannung bzw. einer lokalen Überdehnung eliminiert ist Die Führung bzw. Zentrierung der ersten Linse 8 (Frontlinse) in der zweiten Aufnahme 19 an der zweiten Zentrierfläche 28 bleibt gewährleistet. Der durch die erste Linse 8 (Frontlinse) durchtretende freie Strahldurchmesser kann größer werden, wodurch sich die abträgliche Vignettierung reduzieren lässt. Die Intensität in der Bildebene ist üblicherweise nicht homogen, sondern weist einen Abfall auf, der proportional zu COS⁴ ϕ zum Rand hin verläuft. Mit ϕ ist dabei der Feldwinkel bezeichnet, gemessen gegen die optische Achse. Wird der Strahlengang im Objektiv durch eine weitere Blende zusätzlich zur Aperturblende (Blendenring 4) eingegrenzt, kann der Einfall der Strahlungsintensität zum Bildrand hin stärker abfallen als durch die Beziehung cos⁴ ϕ vorgegeben ist. Diese zusätzliche Abschattung zum Rand hin wird durch den oben stehenden Begriff Vignettierung bezeichnet. Ist die erste Linse 8 (Frontlinse) mittels des Vorschraubrings 17 im Tubus 1 befestigt, kann durch diese die korrekte Position sowohl des Distanzrings 12 als auch des Dichtrings 24 im Tubus 1 visuell kontrolliert werden.

Anstelle des in Fig. 1 am Distanzring 12 aufgenommenen Dichtrings 24, könnte auch ein Dichtmaterial direkt an den Distanzring 12 angespritzt werden und anstelle des in Fig. 1 dargestellten Dichtrings 24 nach Abdichtung eingesetzt werden.

Der in der Darstellung gemäß Fig. 1 dargestellte Distanzring 12 liegt einerseits mit seiner Auflagekante 23 auf der konvex gewölbten Oberseite der zweiten Linse 9 auf und stützt sich andererseits an der zweiten Zentrierfläche 28 der zweiten Aufnahme 19 ab. Die erste Linse 8 (Frontlinse) liegt mit ihrer konkav gekrümmten Oberseite einerseits auf der Oberseite des Ringaufsatzes 13 auf und komprimiert andererseits das elastische Material des Dichtrings 24. Da dies in Form eines Käfigs, gebildet durch die Oberseite des Distanzrings 12 die erste Anlagefläche 14 sowie die zweite Zentrierfläche 28 der zweiten Aufnahme 19, gefangen ist, wird das elastische Material, sei es ein Dichtring 24, sei es ein gespritztes Dichtmaterial, bei Anlage der konkaven Rückseite der ersten Linse 8 (Frontlinse) direkt kontaktiert, so dass sich eine selbst bei leichtem Anziehen des Vorschraubrings 17 eine sehr wirksame Dichtung bildet. Dabei ist sichergestellt, dass die erste Linse 8 (Frontlinse) sowie die zweite Linse 9, die dritte Linse 10 sowie die vierte Linse 11 an den Zentrierflächen 27 bzw. 28 der ersten Aufnahme 6 und der zweiten Aufnahme 19 zentriert sind. Durch die erfindungsgemäß vorgeschlagene Lösung lassen sich gleichzeitig zwei Flächen abdichten, die im rechten Winkel zueinander im Tubus 1 orientiert sind. Durch die erfindungsgemäß vorgeschlagene Lösung kann in vorteilhafter Weise sichergestellt werden, dass keine Umgebungsluft, die über den Spalt zwischen der ersten Linse 8 (Frontlinse) und dem Tubus 1 eindringen kann und von dort in den Hohlraum 25 vordringt.

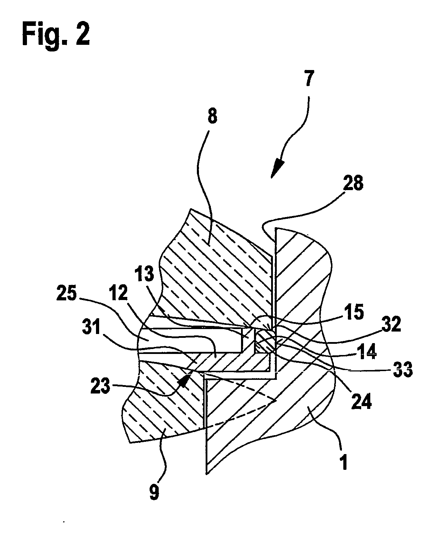

Aus der Darstellung gemäß Figur 2 geht eine Darstellung des Sichtbereichs in vergrößertem Maßstab hervor.

Der Darstellung gemäß Figur ist entnehmbar, dass der Distanzring 12 mit seiner Auflagekante 23 auf der zweiten Linse 9 aufliegt Die zweite Linse 9 ist ihrerseits im Tubus 1 aufgenommen. Der Ringaufsatz 13 des Distanzrings 12 fixiert den Dichtring 24, der einerseits an der ersten Anlagefläche 14 des Ringaufsatzes 13 anliegt und andererseits auf der Oberseite des Distanzrings 12 aufliegt. Durch den Dichtring 24 können sowohl eine erste Dichtfläche 32 als auch eine zweite Dichtfläche 33, die rechtwinklig zueinander verlaufen, abgedichtet werden. Durch die Verformung des Distanzrings 25, der innerhalb eines Käfigs des Distanzrings 12 aufgenommen ist, kann sowohl der Spalt zwischen den ersten Linse 8 (Frontlinse) und der zweiten Zentrierfläche 28 im Tubus 1 abgedichtet werden, als auch der Spalt zwischen der Innenseite der ersten Linse 8 (Frontlinse). Dadurch ist sichergestellt, dass entlang des Außenrands der ersten Linse 8 (Frontlinse) und der zweiten Zentrierfläche 28 des Tubus' 1 keine Umgebungsluft und keine Feuchtigkeit in den den Distanzring 12 aufnehmenden Hohlraum 25 (vgl. Darstellung gemäß Fig. 1) eindringen können.

## Patentansprüche

1. Optische Aufnahmeeinheit mit einem Objektiv, welches einen Linsenstapel (7) aufweist, der eine oder mehrere Linsen (8, 9, 10, 11) umfasst, die in einen Tubus (1) eingelassen sind, wobei der Linsenstapel (7) einen ein elastisches Dichtmaterial oder ein elastisches Dichtelement (24) aufnehmenden Distanzring (12) mit einem Ringaufsatz (13) und einer Anlagefläche (14) umfasst, der sich an einer der Linsen (8, 9, 10, 11) des Linsenstapels (7) abstützt so dass die erste Linse (8) mit ihrer konkav gekrümmten Seite auf der Oberseite des Ringaufsatzes (13) aufliegt und das elastische Dichtmaterial oder das elastische Dichtelement (24) komprimiert und den Tubus (1) abdichtet, wobei der Distanzring (12) zwischen der ersten Linse (8) und einer zweiten Linse (9) angeordnet ist.

2. Optische Aufnahmeeinheit gemäß Anspruch 1, **dadurch gekennzeichnet, dass** der Distanzring (12) in einem Hohlraum (25) des Tubus (1) oberhalb einer der Linsen (9, 10, 11) des Linsenstapels (7) angeordnet ist.

3. Optische Aufnahmeeinheit gemäß Anspruch 1, **dadurch gekennzeichnet, dass** der Distanzring (12) einen Ringaufsatz (13) aufweist, der mit einer Zentrierfläche (28) des Tubus (1) einen Käfig für das Dichtmaterial oder das Dichtelement (24) bildet.

4. Optische Aufnahmeeinheit gemäß Anspruch 1, **dadurch gekennzeichnet, dass** der Distanzring (12) einen federnden Abschnitt (31) zur Anlage an einer der Linsen (9, 10, 11) des Linsenstapels (7) aufweist.

5. Optische Aufnahmeeinheit gemäß Anspruch 1, **dadurch gekennzeichnet, dass** sich der Distanzring (12) an einer konvex gekrümmten Seite einer der Linsen (9) des Linsenstapels (7) abstützt.

6. Optische Aufnahmeeinheit gemäß Anspruch 1, **dadurch gekennzeichnet, dass** sich der Distanzring (12) an einer konkav gekrümmten Seite einer der Linsen des Linsenstapels (7) abstützt.

7. Optische Aufnahmeeinheit gemäß Anspruch 3, **dadurch gekennzeichnet, dass** der Ringaufsatz (13) des Distanzrings (12) eine Auflage (15) aufweist, an welcher die erste Linse (8) bei Anziehen eines Vorschraubrings (17) und Kontaktierung des Dichtmaterials oder des Dichtelements (2) anliegt.

8. Optische Aufnahmeeinheit gemäß Anspruch 4, **dadurch gekennzeichnet, dass** die unterhalb des Distanzrings (12) angeordneten Linsen (9, 10, 11) des Linsenstapels (7) durch die Federzunge (31) an ihre Anlageflächen im Tubus (1) angestellt werden.

9. Optische Aufnahmeeinheit gemäß Anspruch 1, **dadurch gekennzeichnet, dass** der Tubus (1) eine erste Aufnahme (6) und eine zweite Aufnahme (19) aufweist, die jeweils durch Zentrierflächen (27, 28) begrenzt sind.

10. Optische Aufnahmeeinheit gemäß einem oder mehrerer Ansprüche 1 bis 9, **dadurch gekennzeichnet, dass** diese Bestandteil einer in ein Fahrzeug integrierten Kamera ist.

## Claims

1. Optical recording unit having an objective which has a lens stack (7) that comprises one or more lenses (8, 9, 10, 11) which are inserted into a tube (1), the lens stack (7) comprising a spacer ring (12) which accommodates an elastic sealing material or an elastic sealing element (24) and has a ring attachment (13) and a bearing surface (14) which is supported on one of the lenses (8, 9, 10, 11) of the lens stack (7) such that the first lens (8) rests with its concavely curved side on the top side of the ring attachment (13) and compresses the elastic sealing material or the elastic sealing element (24) and seals the tube (1), the spacer ring (12) being arranged between the first lens (8) and the second lens (9).

2. Optical recording unit in accordance with Claim 1, **characterized in that** the spacer ring (12) is arranged in a cavity (25) of the tube (1) above one of the lenses (9, 10, 11) of the lens stack (7).

3. Optical recording unit in accordance with Claim 1, **characterized in that** the spacer ring (12) has a ring attachment (13) which forms, with a centring surface (28) of the tube (1) a cage for the sealing material or the sealing element (24).

4. Optical recording unit in accordance with Claim 1, **characterized in that** the spacer ring (12) has a resilient section (31) for bearing against one of the lenses (9, 10, 11) of the lens stack (7).

5. Optical recording unit in accordance with Claim 1, **characterized in that** the spacer ring (12) is supported on a convexly curved side of one of the lenses (9) of the lens stack (7).

6. Optical recording unit in accordance with Claim 1, **characterized in that** the spacer ring (12) is supported on a concavely curved side of one of the lenses of the lens stack (7).

7. Optical recording unit in accordance with Claim 3, **characterized in that** the ring attachment (13) of the spacer ring (12) has a support (15) against which the first lens (8) bears upon tightening of a front screw ring (17) and contact being made with the sealing material or the sealing element (2).

8. Optical recording unit in accordance with Claim 4, **characterized in that** the lenses (9, 10, 11) of the lens stack (7), which are arranged below the spacer ring (12), are adjusted against their bearing surfaces in the tube (1) by the spring tongue (31).

9. Optical recording unit in accordance with Claim 1, **characterized in that** the tube (1) has a first receptacle (6) and a second receptacle (19) which are delimited in each case by centring surfaces (27, 28).

10. Optical recording unit in accordance with one or more of Claims 1 to 9, **characterized in that** said recording unit is a component of a camera integrated in a vehicle.

## Revendications

1. Unité d'enregistrement optique dotée d'un objectif qui présente un empilement (7) de lentilles qui comprend une ou plusieurs lentilles (8, 9, 10, 11) disposées dans un tube (1),
l'empilement (7) de lentilles comprenant un matériau élastique d'étanchéité ou une bague d'écartement (12) reprenant un élément élastique d'étanchéité (24) et doté d'une couronne annulaire (13) et d'une surface d'appui (14) et qui s'appuie sur une des lentilles (8, 9, 10, 11) de l'empilement (7) de lentilles de telle sorte que la première lentille (8) repose par son côté à courbure concave sur le côté supérieur de la couronne annulaire (13) et comprime le matériau élastique d'étanchéité ou l'élément élastique d'étanchéité (24) pour fermer hermétiquement le tube (1), la bague d'écartement (12) étant disposée entre la première lentille (8) et la deuxième lentille (9).

2. Unité d'enregistrement optique selon la revendication 1, **caractérisée en ce que** la bague d'écartement (12) est disposée dans une cavité (25) du tube (1) située au-dessus d'une des lentilles (9, 10, 11) de l'empilement (7) de lentilles.

3. Unité d'enregistrement optique selon la revendication 1, **caractérisée en ce que** la bague d'écartement (12) présente une couronne annulaire (13) qui forme avec une surface de centrage (28) du tube (1) une cage pour le matériau d'étanchéité ou l'élément d'étanchéité (24).

4. Unité d'enregistrement optique selon la revendication 1, **caractérisée en ce que** la bague d'écartement (12) présente une partie élastique (31) destinée à être placée contre une des lentilles (9, 10, 11) de l'empilement (7) de lentilles.

5. Unité d'enregistrement optique selon la revendication 1, **caractérisée en ce que** la bague d'écartement (12) s'appuie sur un côté à courbure convexe d'une lentille (9) de l'empilement (7) de lentilles.

6. Unité d'enregistrement optique selon la revendication 1, **caractérisée en ce que** la bague d'écartement (12) s'appuie sur un côté à courbure concave de l'une des lentilles de l'empilement (7) de lentilles.

7. Unité d'enregistrement optique selon la revendication 3, **caractérisée en ce que** la couronne annulaire (13) de la bague d'écartement (12) présente un appui (15) sur lequel repose une lentille (8) lorsqu'une bague d'avancement (17) est serrée et entre en contact avec le matériau d'étanchéité ou l'élément d'étanchéité (2).

8. Unité d'enregistrement optique selon la revendication 4, **caractérisée en ce que** des lentilles (9, 10, 11) de l'empilement (7) de lentilles disposées en dessous de la bague d'écartement (12) sont placées dans le tube (1) sur leur surface de pose par l'intermédiaire des languettes élastiques (31).

9. Unité d'enregistrement optique selon la revendication 1, **caractérisée en ce que** le tube (1) présente un premier logement (6) et un deuxième logement (19) qui sont tous deux délimités par des surfaces de centrage (27, 28) respectives.

10. Unité d'enregistrement optique selon l'une des revendications 1 à 9, **caractérisée en ce qu'**elle fait partie d'une caméra intégrée dans le véhicule.
